# EUROPEAN PATENT APPLICATION

(11) **EP 4 465 499 A1**
(43) Date of publication of application: **20.11.2024**
(21) Application number: 23461591.2
(22) Date of filing: 16.05.2023
(51) Int. Cl.: H02K 5/20

(54) **MOTOR RADIATOR**

(71) Applicant: Hamilton Sundstrand Corporation, Charlotte, NC 28217 (US)
(72) Inventor: MECZKOWSKI, Tomasz, 19-200 Grajewo (PL); ZURAW, Sebastian, 45-368 Opole (PL); ZIELINSKI, Robert, 52-131 Wroclaw (PL)
(74) Representative: Dehns

(57) **Abstract**

A cooling structure for a rotary electric machine, the structure comprising an annular radiator body (30) defining an axis X between a first end and a second end, the annular body having a radially inner wall and a radially outer wall and a plurality of channels (35) defined between the radially inner wall and the radially outer wall, each extending from the first end to the second end, each channel comprising a divider wall (40) extending along the axis between the first end and the second end, separating the respective channel into two sub-channels (35a, 35b), the divider wall having a corrugated shape defining alternating peaks (42) and valleys (44) along the axial length of the divider wall.

## Description

### TECHNICAL FIELD

The present disclosure is concerned with a cooling structure or radiator for a rotary electrical motor.

### BACKGROUND

A rotary electrical machine or motor comprises a rotor and a stator mounted coaxially within a motor housing. In an inner-rotor type, the motor comprises a rotating motor shaft rotatable about an axis, a rotor rotatably disposed to the rotor shaft and a stator mounted coaxially around the rotor, within the housing. The rotor has a rotor core and a plurality of permanent magnets supported by the core. The stator is provided with windings between gaps around the stator. Other electric motor designs have an outer-rotor design where the rotor is mounted and rotates around the stator. In either case, heat is generated by the relative rotation of the rotor and the stator and so typically, motors are provided with a cooling structure (or radiator) provided within the housing - typically as an annular body defining a plurality of axially extending channels between the outermost of the rotor and the stator, and the housing. The cooling structure is provided with one or two inlets at a first end and an outlet at a second, opposite end. Coolant e.g. air or liquid is provided to the structure at the inlet (in the case of two inlets, these may be used selectively depending on the context in which the motor is mounted) and flows through the channels to the outlet. The walls of the channels are adjacent the motor structure and so heat generated by operation of the motor passes through the walls and is absorbed by the coolant as it passes through the channels. The coolant thus becomes warmer by drawing heat away from the motor as it passes through the channels and warm coolant is ejected at the outlet.

While conventional radiators have proven fit for purpose, there is a desire for improved cooling structures that can provide more effective and efficient cooling without adding to the cost, complexity, size or weight of the structure.

### SUMMARY

According to the present disclosure, there is provided a cooling structure for a rotary electric machine, the structure comprising an annular radiator body defining an axis X between a first end and a second end, the annular body having a radially inner wall and a radially outer wall and a plurality of channels defined between the radially inner wall and the radially outer wall, each extending from the first end to the second end, each channel comprising a divider wall extending along the axis between the first end and the second end, separating the respective channel into two sub-channels, the divider wall having a corrugated shape defining alternating peaks and valleys along the axial length of the divider wall. The divider wall may also be provided with perforations therethrough.

### BRIEF DESCRIPTION

Examples of the radiator according to this disclosure will now be described with reference to the drawings. It should be noted that these are examples only, and variations are possible within the scope of the claims.
Figure 1 is a three-dimensional view of a conventional rotary electric motor with a cooling structure.
Figure 2 is a partial section of a motor and cooling structure according to the disclosure.
Figure 3 is a detailed view of a channel of a radiator according to the disclosure, looking into the channel from an end.
Figure 4 is a sectional view of a channel of a radiator according to the disclosure.

### DETAILED DESCRIPTION

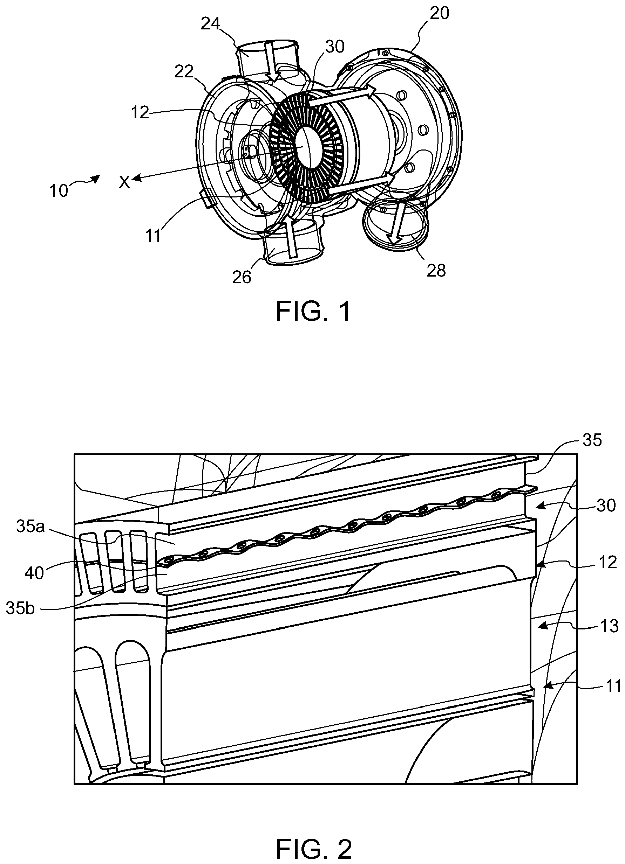

As mentioned above, a rotary electrical machine or motor typically comprises a rotor and a stator. In the example shown in Fig. 1, the motor 10 has a rotor in the form of a rotatable shaft 11, rotatable about an axis X around which is mounted, coaxially, a stator 12. The stator includes stator windings 13 (seen in Fig. 2) in stator gaps around the stator body as is conventional. The structure and operation of the rotary motor are conventional and well-known and will not be described further. The example shows an inner-rotor design. The motor could, however, also be an outer rotor/inner-stator design. Again, such motors are conventional and will not be described further.

Due to the rotation of the rotor relative to the stator, voltage and heat are generated at the stator. For efficiency and, in some cases, safety, there is a need to remove that heat from the motor. This is typically provided for by a cooling structure.

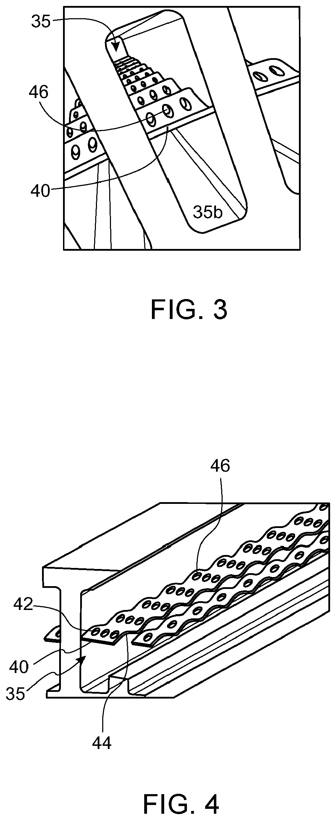

A housing 20 containing the stator and the rotor also contains a cooling structure between the motor parts 11, 12 and the housing 20. The cooling structure is typically an annular radiator 30 mounted around the motor parts having a plurality of channels 35 (seen in Figs. 2 to 4) extending axially from one end of the motor to the other. A manifold 22 is provided on the housing to provide coolant to and for coolant to exit from the radiator. In the example shown, the manifold 22 is provided with two inlets 24, 26 to which coolant can be provided selectively. For example, if the motor is provided for an aircraft, it could be mounted to either a left side or a right side and so the inlet 24, 26 on that side will be used and the other will be blocked off. In other examples, the manifold may only have a single inlet. The manifold also has an outlet 28 via which the coolant exits after it has passed through the radiator 30. The coolant may be air (e.g. ambient or cooled air e.g. RAM air in the case of an aircraft) or may be a coolant fluid or gas.

Conventionally, the radiator is machine manufactured using molding or other techniques and the channels have smooth inner walls. According to the present disclosure, the performance of the radiator is improved by providing a corrugated (or wavy) divider wall 40 along each of the radiator channels 35. The divider wall separates the channel 35 into to sub-channels 35a, 35b. The divider wall preferably extends from the first end to the second end, but may also be shorter than the length of the channel. The divider wall 40 may be located substantially in the middle of the channel to divide the channel into two substantially equally-sized sub-channels 35a, 35b, but this is not essential and other positions of the divider wall in the channel are also possible. The wavy/corrugated shape of the divider wall 40 defines alternating peaks 42 and valleys 44 axially along the channel 35. The wavy divider wall 40, which can be made by additive manufacture, provides an increased heat transfer surface area for the medium in the channel 35.

The divider wall 40 provides an additional surface, for each channel compared to channels only having their outer walls defining the heat transfer surfaces. Further, this is not just a straight/flat surface but, rather, a wavy or corrugated surface so adding turbulence and maximising heat transfer area for a given length of channel. It is also feasible that heat transfer could be further improved by incorporating more than one such dividing wall in each channel, but the heat transfer advantages would need to be weighed up against the additional cost and weight and the resistance to air flow through the channel when it contains several divider walls.

The wavy divider wall 40 in the channel 35 divides the air flow volume through the channel. A potential down side of this is that it can create a pressure drop - i.e. flow losses. This can be addressed by a modification of the divider wall, which further improves the heat transfer properties of the radiator, in which the divider wall 40 is provided with holes 46 therethrough. Again, the use of additive manufacture makes this commercially feasible. The perforations or holes help to reduce flow losses that may result from the presence of the divider wall and also contribute to the increase in heat transfer area (by means of the periphery of the holes). The holes allow the stream of medium to gain useful additional volume to discharge, thus, flow resistance is reduced and the pressure drop is reduced. The perforations can also help reduce the 'dead zone' which can be created by the valleys of the divider wall 40, thus maximising use of the wavy structure of the divider wall.

Measurements taken for radiators using this design have shown an improved heat transfer area, reduced pressure drop and, therefore, increased heat exchange efficiency factor compared to conventional straight channels. The resulting disturbances in flow structure lead to an energy exchange between individual gas particles and the solid surface of the channel, which contributes to higher heat transfer efficiency. There is, however, hardly any change in pressure drop across the channels compared to the channels of the conventional designs. The shape and size of the wavy divider wall and the heights of the peaks/depths of the valleys, as well as the shape, size, distribution pattern and density of the holes can be adjusted according to application requirements.

The formation of channels and divider walls having such configurations have recently become possible due to the advent of and advances in additive manufacturing (AM) technology. AM allows the radiator of this disclosure to be formed in a simple and economic manner. Alternatively, however, the channels could be formed using other known methods.

## Claims

1. A cooling structure for a rotary electric machine, the structure comprising an annular radiator body (30) defining an axis X between a first end and a second end, the annular body having a radially inner wall and a radially outer wall and a plurality of channels (35) defined between the radially inner wall and the radially outer wall, each extending from the first end to the second end, each channel comprising a divider wall (40) extending along the axis between the first end and the second end, separating the respective channel into two sub-channels (35a, 35b), the divider wall having a corrugated shape defining alternating peaks (42) and valleys (44) along the axial length of the divider wall.

2. The cooling structure of claim 1, wherein the divider wall (40) is provided with perforations (46) therethrough.

3. The cooling structure of claim 2, wherein the perforations have a circular cross-section.

4. The cooling structure of claim 2, wherein the perforations have a non-circular cross-section.

5. The cooling structure of any preceding claim wherein the radiator body is formed by additive manufacturing.

6. The cooling structure of any of claims 1 to 5, wherein the radiator body is formed by a lost-wax casting method.

7. The cooling structure of any preceding claim wherein the divider wall (40) is formed by additive manufacturing.

8. The coolant structure of any preceding claim, further comprising a coolant inlet at the first end and a coolant outlet at the second end.

9. A rotary electric motor comprising a rotor and a stator in coaxial arrangement and a cooling structure as claimed in any preceding claim around the rotor and stator.

10. A rotary electric motor as claimed in claim 9, further comprising a housing containing the coaxial assembly of the rotor and the stator and the cooling structure.

11. A rotary electric motor as claimed in claim 10 in combination with claim 8, wherein the housing includes a manifold defining the inlet and the outlet.

12. A rotary electric motor as claimed in any preceding claim, further comprising a source of coolant provided to the coolant structure to flow through the channels from the first end to the second air.

13. A rotary electric motor as claimed in claim 12, wherein the coolant is air.

14. A rotary electric motor as claimed in any of claims 9 to 13, being a motor in an aircraft.
